# DEMANDE DE BREVET EUROPEEN

(11) **EP 1 818 587 A2**
(43) Date de publication de la demande: **15.08.2007**
(21) Numéro de dépôt: 07290129.1
(22) Date de dépôt: 01.02.2007
(51) Int. Cl.: F16L 11/08

(54) **Tuyau souple en matière plastique**

(30) Priorité: 09.02.2006 FR 0601146
(71) Demandeur: Hozelock Tricoflex, 92500 Rueil Malmaison (FR)
(72) Inventeur: Pinoit, Dominique, 51300 Pringy (FR)
(74) Mandataire: Robert, Jean-Pierre

(57) **Abrégé**

Tuyau souple en matière plastique multicouche qui comporte :
- une couche interne (1) en matière plastique compatible avec le transport de l'eau,
- au moins une couche externe (2) en matière plastique souple,
- une armature tubulaire (3) entre les deux couches, ces matériaux étant de qualité alimentaire,

caractérisé en ce que l'armature tubulaire (3) est formée à partir de fibres de verre longues, tressées, guipées ou enroulées.

## Description

La présente invention concerne un tuyau souple en matière plastique multicouche pour le transport de fluides destiné par exemple à être implanté dans des installations fixes ou mobiles de distribution d'eau, notamment d'eau sanitaire qui est soit destinée à la consommation, ou qui, sans être destinée à la consommation, peut être absorbée.

### ARRIERE PLAN DE L'INVENTION

Actuellement, les éléments destinés à être implantés dans les circuits de distribution d'eau potable, comme par exemple les canalisations, les robinets, les raccords, doivent recevoir une attestation de conformité à des normes sanitaires de deux niveaux. Dans le premier niveau, l'élément ne peut être utilisé que pour des applications dans lesquelles il n'est en contact avec l'eau potable transportée que pendant de courtes durées, éventuellement de façon répétée. Dans le deuxième niveau, l'élément peut être utilisé pour toute application de transport d'eau potable et en particulier pour celles où l'eau est en contact continûment avec l'élément.

Il est connu du document FR-A-2794 212 un tuyau souple en matière plastique multicouche comportant, de l'intérieur vers l'extérieur une couche interne d'une polyoléfine inerte par rapport à l'eau, une couche de liaison ayant des propriétés d'adhésion envers la polyoléfine et un polychlorure de vinyle souple, une couche externe en polychlorure de vinyle souple, et une armature tubulaire au contact du polychlorure de vinyle. Ce tuyau ne satisfait pas aux normes (notamment relatives au transport de l'eau potable) qui exigent de contrôler en plus du tuyau chacun des composants qui le constitue.

On a également décrit dans le document FR-A-2 865 521 un tuyau souple en matière plastique multicouche, comportant, de l'intérieur vers l'extérieur :
- une couche interne comportant un plastomère inerte par rapport à l'eau,
- une couche de liaison ayant des propriétés d'adhésion envers le plastomère et le polychlorure de vinyle souple,
- une couche de polychlorure de vinyle souple,
- une armature tubulaire au contact du polychlorure de vinyle, ces matériaux étant de qualité alimentaire. L'armature tubulaire est de préférence réalisée ici à base de polyester et plus précisément de fibres de polyéthylène téréphtalate (PET). Des fibres de polyamide ou de polypropylène pourraient également être utilisés.

On s'est rendu compte que ce genre de structure présentait le risque d'une migration de certains composants du tuyau composite vers la surface du tube en contact avec l'eau, notamment des additifs présents dans l'armature.

### OBJET DE L'INVENTION

L'invention entend satisfaire aux exigences de premier niveau des normes rappelées ci-dessus pour ce qui concerne les tuyaux de longueur au plus égale à deux mètres, dans une structure économique.

### RESUME DE L'INVENTION

A cet effet, l'invention a pour objet un tuyau souple en matière plastique multicouche qui comporte, de l'intérieur vers l'extérieur:
- une couche interne, en polychlorure de vinyle (PVC),
- une couche externe souple, en polychlorure de vinyle (PVC).
- une armature tubulaire entre les deux couches, ces matériaux étant de qualité alimentaire,
dans lequel l'armature tubulaire est formée à partir de fibres de verre longues, tressées, guipées ou enroulées.

Le tuyau ainsi constitué est apte au transport de l'eau potable sur de courtes distances et présente une souplesse suffisante à l'implantation aisée du tuyau tout en conservant de relativement bonnes qualités mécaniques notamment en ce qui concerne la résistance à l'éclatement à l'égard de la pression régnant généralement dans les circuits auquel ce tuyau est destiné et la résistance aux sollicitations extérieures.

Selon un mode de réalisation particulier, les couches en PVC ont des épaisseurs comprises entre 0,1 mm à 4 mm environ pour la couche interne, et 0,5 mm à 4 mm environ pour la ou les couches externes. Cette structure représente un compromis satisfaisant entre souplesse et résistance mécanique.

D'autres caractéristiques et avantages de l'invention ressortiront à la lecture de la description qui suit d'un mode de réalisation particulier non limitatif de l'invention.

### BREVE DESCRIPTION DES DESSINS

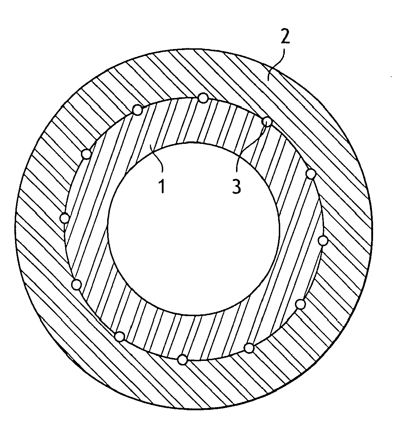

Il sera fait référence à la figure unique annexée représentant une vue en coupe transversale d'un tuyau conforme à l'invention.

### DESCRIPTION DETAILLEE DE L'INVENTION

En référence à la figure, le tuyau conforme à l'invention comprend une couche interne 1 réalisée en polychlorure de vinyle, dont les caractéristiques sont compatibles avec le transport de l'eau sur de courtes distances et sont conformes au premier niveau d'exigence des normes sanitaires prévoyant que cette couche puisse être en contact avec de l'eau. Ce matériau possède des propriétés physiques et chimiques adaptées au transport de l'eau consommable sur des distances au plus égales à deux mètres.

La couche interne 1 a une épaisseur comprise entre 0,1 mm et 4 mm. La faible épaisseur de la couche interne rend celle-ci déformable et contribue à conférer de la souplesse au tuyau. A titre d'exemple, pour un diamètre interne du tuyau de 13 mm, la couche interne a une épaisseur d'environ 0,5 mm.

Une couche externe 2 est formée par le même matériau que la couche interne, un polychlorure de vinyle, mais modifié pour être souple, ayant une épaisseur comprise entre 0,5 et 4 mm.

La couche externe pourrait aussi être formée d'une première couche de polychlorure de vinyle souple ayant une épaisseur comprise entre 0,5 mm et 2 mm et d'une deuxième couche de polychlorure de vinyle souple ayant également une épaisseur comprise entre 0,5 mm et 2 mm. Le polychlorure de vinyle utilisé est apte à un contact alimentaire.

Une armature tubulaire 3 est disposée au contact du polychlorure de vinyle entre par exemple la couche interne 1 et la couche externe 2. L'armature tubulaire 3 est réalisée ici à base de fibres de verre longues qui sont disposées autour de la première couche de polychlorure de vinyle. Ces fibres sont disposées selon des techniques connues de guipage, d'enroulage par nappe de fibres ou de tresses de fibres autour du noyau de tube déjà extrudé.

Les matériaux utilisés sont de qualité alimentaire.

Le tuyau ainsi réalisé est conforme à l'Arrêté du 29 mai 1997 relatif aux objets utilisés dans la distribution d'eau potable destinée à la consommation humaine.

Le tuyau conforme à l'invention est réalisé selon la technique bien connue de coextrusion.

D'une manière générale, les épaisseurs des différentes couches sont déterminées de manière que le tuyau soit suffisamment souple et résistant et sont adaptées au diamètre interne du tuyau.

## Revendications

1. Tuyau souple en matière plastique multicouche qui comporte :
- une couche interne (1) en polychlorure de vinyle,
- au moins une couche externe (2) en polychlorure de vinyle,
- une armature tubulaire (3) entre les deux couches, formée à partir de fibres de verre longues, tressées, guipées ou enroulées.

2. Tuyau selon la revendication 1, **caractérisé en ce que** les couches ont des épaisseurs comprises entre 0,1 mm à 4 mm environ pour la couche interne (1), et 0,5 mm à 4 mm environ pour la ou les couches externes (3).
